# FASCICULE DE BREVET EUROPEEN

(11) **EP 2 935 382 B1**
(45) Date de publication et mention de la délivrance du brevet: **10.05.2023**
(21) Numéro de dépôt: 13820820.2
(22) Date de dépôt: 17.12.2013
(51) Int. Cl.: C08G 8/00, C08K 3/00, C08K 7/28, C08L 61/04

(54) **COMPOSITION COMPRENANT UNE RÉSINE PHÉNOLIQUE, MATÉRIAU COMPOSITE COMPRENANT UNE TELLE COMPOSITION ET PROCÉDÉ DE PRÉPARATION D'UN MATÉRIAU COMPOSITE**
ZUSAMMENSETZUNG AUS EINEM PHENOLHARZ, VERBUNDSTOFF MIT EINER DERARTIGEN ZUSAMMENSETZUNG UND VERFAHREN ZUR HERSTELLUNG EINES VERBUNDSTOFFS
COMPOSITION COMPRISING A PHENOLIC RESIN, COMPOSITE MATERIAL COMPRISING SUCH A COMPOSITION AND PROCESS FOR PREPARING A COMPOSITE MATERIAL

(30) Priorité: 18.12.2012 FR 1262251
(43) Date de publication de la demande: 28.10.2015
(73) Titulaire: Seguin, Pascal, 78310 Coignieres (FR); Servouse, Jean-Loup, 31000 Toulouse (FR); Bouillon, Hubert, FARO (PT)
(72) Inventeur: Seguin, Pascal, 78310 Coignieres (FR); Servouse, Jean-Loup, 31000 Toulouse (FR); Bouillon, Hubert, FARO (PT)
(74) Mandataire: BARRE LAFORGUE
(86) Numéro de dépôt international: PCT/FR2013/053141
(87) Numéro de publication internationale: WO 2014/096685

(56) Documents cités:
- DE-A1- 4 135 678
- DE-A1-102006 044 486
- GB-A- 2 359 085
- JP-A- 2011 241 267
- JP-A- 2011 241 268
- JP-A- 2011 241 269
- US-A- 3 655 609

## Description

L'invention concerne une composition comprenant une résine phénolique. L'invention concerne également un matériau composite sandwich comprenant une telle composition et un procédé de préparation d'un tel matériau composite sandwich.

La fiabilité des matériaux utilisés dans le domaine de l'ameublement et de l'aménagement ou plus encore de la construction aéronautique, maritime ou ferroviaire est primordiale en termes de sécurité. En particulier, les propriétés mécaniques et de résistance au feu doivent être maximales, tout en limitant la masse de chaque élément structurel ou fonctionnel.

On sait que les matériaux à base de résine phénolique présentent une très bonne tenue à la chaleur et au feu, sont autoextinguibles et ne dégagent pas de fumées toxiques. Cependant ces matériaux sont actuellement très peu utilisés compte tenu de leurs nombreux inconvénients de mise en oeuvre, notamment leur faible aptitude à être mis en forme et leur tendance au moussage, au profit par exemple des résines époxy dont les propriétés de résistance au feu sont nettement inférieures.

On connait de RU 2186799 un matériau composite polymère durcissable à froid comprenant un phénoplaste de résol, un durcissant, un plastifiant et des microsphères creuses. Selon RU 2186799, 15 à 25 parties en poids de plastifiant et 40 à 50 parties en poids de microsphères creuses sont nécessaires pour 100 parties en poids de phénoplaste de résol. Un matériau selon RU 2186799 comprend ainsi 24 à 29 % en poids de microsphères creuses et 9 à 15 % en poids de plastifiant par rapport au poids total dudit matériau.

Cependant, l'ajout de telles proportions d'un plastifiant abaisse considérablement la résistance au feu du matériau composite polymère préparé. En outre, une telle formulation ne permet pas d'éviter le moussage de la résine phénolique, rendant le matériau difficilement utilisable pour des applications dans des matériaux à hautes performances tels que des matériaux destinés au
domaine aéronautique. La formation de mousse peut en effet déformer les matériaux au sein desquels ou au contact desquels elle est utilisée et la mousse formée présente des propriétés mécaniques très faibles, même en présence de charges de microsphères creuses.

Le document US 3,655,609 décrit l'utilisation de composition à base de résine pour la fabrication d'élément résistants à l'usure qui peuvent être appliqués à au recouvrement de freins et d'embrayage.

Le document GB 2 359 085 divulgue quant à lui l'utilisation de résines phénoliques pour concevoir un matériau d'isolation thermique. A ces fins, la résine phénolique comprend des charges choisies parmi les sulfates de métaux alcalino-terreux, les oxydes de métaux alcalino-terreux et des minéraux choisis parmi les verres de silice, le mica, les roches ignées et les minéraux dérivés de roches ignées.

Une autre application des résines est décrite par le document DE 10 2006 044 486 qui enseigne comment réaliser un matériau de remplissage à l'aide d'une résine époxy et de microsphères de verre ces dernières présentant un revêtement de surface électriquement conducteur.

Le document DE 41 35 678 expose des matériaux intumescents qui s'expansent en cas de forte température, ces matériaux comprennent 10 à 60 % en poids de graphite, 5 à 25% en poids d'un liant polymérique et 0,5 à 5 % en poids de microsphères creuses.

En outre, les documents JP 2011 214269, JP 2011 241268 et JP 2011 241267 décrivent quant à eux des charges de verre dont la surface extérieure est traitée pour augmenter l'adhésion entre les charges de verre et une résine phénolique dans laquelle les charges de verre seraient ajoutées.

Dans ce contexte, l'invention vise à pallier ces inconvénients et à proposer une composition permettant :
- de renforcer mécaniquement un matériau composite sandwich, notamment au cours de l'usinage ou de la réparation d'un panneau en matériau composite sandwich,
- d'éviter la formation de mousse par la résine phénolique,
- d'améliorer la résistance au feu et de diminuer l'inflammabilité d'un matériau composite sandwich,
- de diminuer les émanations de fumées toxiques d'un matériau composite sandwich en cas d'incendie,
- de renforcer localement la résistance mécanique et la résistance au feu des extrémités d'un panneau en matériau composite sandwich,
- d'assembler plusieurs panneaux en matériau composite sandwich entre eux,
- de fixer d'un insert métallique au sein dudit matériau composite sandwich.

Pour ce faire, l'invention concerne une composition comprenant :
- au moins un liant choisi parmi les résines phénoliques,
- des particules formées d'au moins un solide pulvérulent choisi parmi le verre, les polymères, la silice et leurs mélanges, lesdites particules présentant une taille moyenne inférieure à 1 mm,
caractérisée en ce qu'elle comprend entre 34 % et 50 % en poids dudit solide pulvérulent par rapport au poids total de ladite composition.

En outre, avantageusement et selon l'invention une telle composition est dénuée de catalyseur dudit liant. L'invention concerne donc également une composition constituée :
- 55 % à 66 % d'au moins un liant choisi parmi les résines phénoliques,
- 34 % à 50 % en poids de particules formées d'au moins un solide pulvérulent par rapport au poids total de ladite composition, ledit solide pulvérulent étant choisi parmi le verre, les polymères, la silice et leurs mélanges, et lesdites particules présentant une taille moyenne inférieure à 1 mm.

En particulier, l'invention concerne une composition comprenant :
- au moins un liant choisi parmi les résines phénoliques,
- des particules de résine phénolique à titre de solide pulvérulent, lesdites particules présentant une taille moyenne inférieure à 1 mm,
caractérisée en ce qu'elle comprend entre 34 % et 50 % en poids de particules de résine phénolique par rapport au poids total de ladite composition.

En effet, les inventeurs ont constaté avec surprise qu'il est possible d'incorporer un tel pourcentage en poids d'un solide pulvérulent dans une composition à base de résine phénolique sans abaisser les propriétés finales de la résine phénolique et notamment la résistance au feu. En outre, l'incorporation d'un tel pourcentage en poids d'au moins un matériau pulvérulent dans une composition à base de résine phénolique permet d'éviter le moussage de la résine phénolique et ainsi d'éviter la diminution des propriétés physico-chimiques et mécaniques ainsi que l'éventuelle déformation des matériaux au contact de celle-ci due à l'augmentation de volume entrainé par le moussage. Aucune explication scientifique ne permet à ce jour d'expliquer avec certitude un tel résultat. A l'inverse, on aurait même pu penser qu'ajouter un solide pulvérulent à une composition à base de résine phénolique aurait plutôt eu pour conséquence d'amplifier ce moussage.

Dans tout le texte, on entend par « résine phénolique » tout composé précurseur d'un matériau polymère comprenant au moins un groupement phénol, ou, plus particulièrement, tout polymère comprenant au moins un groupement phénol.

En particulier, une résine phénolique utilisée dans une composition selon l'invention comprend au moins un groupement de formule chimique (I) suivante :

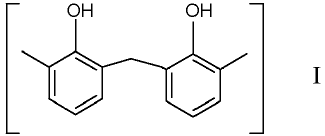

Dans tout le texte, on entend par « résine phénolique polymérisée » tout matériau polymère de formule chimique (I) au moins partiellement réticulé, c'est-à-dire formant un réseau tridimensionnel (polymère thermodurcissable).

Avantageusement et selon l'invention, les résines phénoliques sont obtenues par polycondensation de formaldéhyde (formol) et de phénol et/ou d'un dérivé phénolique. Ledit dérivé phénolique est choisi parmi le crésol, la résorcine, le xylénol et leurs mélanges.

Une composition selon l'invention peut comprendre tous type(s) de résine phénolique à titre de liant pour les particules de solide(s) pulvérulentes). La proportion de résine(s) phénolique(s) est intimement liée à la proportion de solide(s) pulvérulent(s). Avantageusement et selon l'invention, ladite composition comprend entre 50 % et 66 % en poids dudit liant par rapport au poids total de ladite composition, et en particulier entre 55 % et 65 % en poids dudit liant par rapport au poids total de ladite composition. Ainsi, une composition selon l'invention ne nécessite que peu d'ingrédients, c'est-à-dire au moins un liant choisi parmi les résines phénoliques et au moins un solide pulvérulent choisi parmi le verre, les polymères, la silice et leurs mélanges.

Chaque liant présente une viscosité adaptée pour permettre un mélange sensiblement homogène avec les particules de solide(s) pulvérulent(s). Avantageusement et selon l'invention, le liant utilisé présente une viscosité comprise entre 50 mPa.s et 500 mPa.s, notamment une viscosité comprise entre 150 mPa.s et 350 mPa.s.

La proportion de solide pulvérulent dans une composition selon l'invention est adaptée pour améliorer la résistance au feu d'une composition selon l'invention tout en limitant ou en diminuant la masse volumique (ou la densité) de la composition et en permettant l'obtention d'une composition présentant une consistance adaptée à tous types d'applications (avant polymérisation complète) et de bonnes propriétés mécaniques (après polymérisation). Une composition selon l'invention comprend une proportion relativement importante de solide pulvérulent, notamment entre 34 % et 50 % en poids dudit solide pulvérulent par rapport au poids total de ladite composition. En particulier, avantageusement et selon l'invention, ladite composition comprend entre 35 % et 47 % en poids dudit solide pulvérulent par rapport au poids total de ladite composition, et en particulier entre 37 % et 45 % en poids dudit solide pulvérulent par rapport au poids total de ladite composition.

Une composition selon l'invention présente un rapport massique solide pulvérulent/liant (ou solide(s) pulvérulent(s)/résine(s) phénolique(s)) compris entre 0,55 et 0,9. En particulier, avantageusement et selon l'invention, ladite composition présente un rapport massique solide pulvérulent/liant (ou solide pulvérulent/résine phénolique) compris entre 0,6 et 0,9, notamment compris entre 0,6 et 0,75. En d'autres termes, avantageusement et selon l'invention, ladite composition comprend entre 60 % et 90 % en poids dudit solide pulvérulent par rapport au poids dudit liant. En particulier, ladite composition comprend entre 60 % et 75 % en poids dudit solide pulvérulent par rapport au poids dudit liant (c'est-à-dire de résine phénolique).

Une composition selon l'invention comprend donc également, outre au moins un liant, des particules formées d'au moins un solide pulvérulent choisi parmi le verre, les polymères, la silice et leurs mélanges.

En particulier, lesdites particules formées d'au moins un solide pulvérulent sont adaptées pour améliorer la résistance au feu d'une composition selon l'invention. Lesdites particules formées d'au moins un solide pulvérulent peuvent donc être formées d'au moins un matériau choisi dans le groupe formé du verre, des polymères et de la silice (oxyde de silicium).

Lesdites particules formées d'au moins un solide pulvérulent peuvent se présenter sous toutes formes, tout en restant adaptées pour pouvoir former un mélange sensiblement homogène avec le(s) liant(s). Les particules formées d'au moins un solide pulvérulent peuvent par exemple être sous la forme de billes, de cubes, de tubes, de bâtonnets ou encore de fils ou de filaments, creux/(ses) ou plein(e)s. Avantageusement et selon l'invention, lesdites particules formées d'au moins un solide pulvérulent sont des particules creuses, de préférence en majorité au moins sensiblement sphériques.

En particulier, avantageusement et selon l'invention, le solide pulvérulent est choisi parmi les particules polymériques. Tous types de particules polymériques peuvent être utilisés à titre de solide pulvérulent, notamment les particules formées d'au moins un polymère, notamment d'au moins un polymère thermodurcissable. Avantageusement et selon l'invention, lesdites particules polymériques sont choisies parmi les particules polymériques ignifugées ou présentant une résistance au feu ou aux hautes températures améliorée.

Avantageusement et selon l'invention, lesdites particules formées d'au moins un solide pulvérulent sont choisies parmi les particules de résine phénolique. Avantageusement et selon l'invention, lesdites particules polymériques sont choisies parmi les particules à base de résine phénolique. Avantageusement et selon l'invention, la composition comprend au moins 10 % en poids de particules de résine phénolique, à titre de solide pulvérulent, par rapport au poids total de ladite composition. Une composition selon l'invention comprenant des particules de résine phénolique à titre de solide pulvérulent présente une masse volumique plus faible qu'avec d'autres particules telles que du verre et présente également une meilleure résistance au feu.

En particulier, avantageusement et selon l'invention, le solide pulvérulent est choisi parmi les particules de silice, notamment les particules de silice pyrogénée, les particules de silice précipitée ou encore les particules dites de fumées de silice.

En outre, il est bien sûr possible d'utiliser, à titre de matériau pulvérulent, un mélange de particules choisies parmi le verre, les polymères et la silice. Dans une variante de réalisation particulièrement avantageuse d'une composition selon l'invention, ledit matériau pulvérulent comprend au moins des particules de verre et des particules polymériques, en particulier des particules de résine phénolique. Une composition selon l'invention comprend par exemple entre 10 % et 30 % de particules de résine phénolique et entre 4 % et 40 % de particules formées d'au moins un solide pulvérulent choisi parmi le verre, les polymères, la silice et leurs mélanges.

Avantageusement et selon l'invention, lesdites particules présentent une taille moyenne (ou diamètre équivalent sphérique moyen) inférieure à 1 mm. En outre, avantageusement et selon l'invention, lesdites particules formées d'au moins un solide pulvérulent présentent un diamètre moyen compris entre 20 µm et 200 µm, en particulier compris entre 40 µm et 150 µm. Le diamètre moyen des particules peut être mesuré par tamisage ou par diffraction Laser. Le diamètre moyen des particules est de préférence mesuré par tamisage.

Avantageusement et selon l'invention, lesdites particules formées d'au moins un solide pulvérulent présentent une densité apparente comprise entre 0,05 et 0,7. En particulier, avantageusement et selon l'invention, lesdites particules formées d'au moins un solide pulvérulent présentent une densité apparente comprise entre 0,1 et 0,6, et plus particulièrement entre 0,1 et 0,4. De cette façon, lesdites particules formées d'au moins un solide pulvérulent permettent d'abaisser la densité (et la masse volumique) de la composition selon l'invention.

Dans tout le texte, on désigne par densité apparente la densité d'un solide pulvérulent en vrac, soit la masse volumique apparente dudit solide pulvérulent (masse dudit matériau pulvérulent/volume occupé par cette masse) sur la masse volumique de l'eau pure à 4°C. De préférence, la densité apparente d'un solide pulvérulent est mesurée conformément à la norme ISO 3923/2.

L'utilisation de particules présentant une telle densité apparente faible permet de diminuer la masse volumique d'une composition selon l'invention, lesdites particules présentant une masse volumique inférieure à celle de la ou des résines phénoliques utilisée(s) à titre de liant. De telles particules présentant une faible densité permettent en outre de limiter considérablement l'augmentation en poids des pièces en matériau composite sandwich dans lesquelles la composition selon l'invention est ajoutée.

Ainsi, avantageusement et selon l'invention, une composition selon l'invention présente une densité comprise entre 0,15 et 0,9, en particulier entre 0,2 et 0,7, et plus particulièrement entre 0,4 et 0,6 (avant ou après une étape de polymérisation).

D'autre part, une composition selon l'invention ne nécessite que peu d'ingrédients et est simple et rapide à préparer à l'échelle industrielle.

Ainsi, en particulier, avantageusement et selon l'invention, ladite composition est dénuée de plastifiant. Les plastifiants sont des composés facilement inflammables et l'utilisation de plastifiant(s) présente l'inconvénient de diminuer significativement la résistance au feu. Dans tout le texte, on désigne par « plastifiant » tout composé de volatilité faible ou négligeable ajouté dans un matériau polymère de façon à réduire les interactions entre les chaînes de polymère et à abaisser la température de transition vitreuse d'un polymère.

Compte tenu de l'absence d'ajout d'autres composés tels que des plastifiants, la résistance au feu d'une composition selon l'invention n'est donc pas susceptible d'être altérée.

Une composition selon l'invention peut cependant éventuellement comprendre un ou plusieurs additifs ou d'autres charges telles que des particules minérales (par exemple des oxydes, des carbonates, des borates, des silicates ou encore de la poudre de marbre). En particulier, lesdits additifs et charges sont choisis parmi les additifs et les charges non susceptibles de diminuer la résistance au feu d'une composition selon l'invention. En particulier, une composition selon l'invention comprend moins de 10 % en poids, et notamment moins de 5 % en poids, desdits additifs ou charges (autres que les particules formées d'au moins un solide pulvérulent) par rapport au poids total de ladite composition.

En outre, il n'est pas forcément nécessaire d'ajouter à la composition selon l'invention un catalyseur (ou un durcisseur) de la réaction de polymérisation de la résine phénolique. Un tel catalyseur peut cependant être utilisé lorsqu'il est par exemple nécessaire de contrôler précisément la durée et/ou la température de polymérisation de la résine phénolique ou d'accélérer ladite polymérisation. Avantageusement et selon l'invention, ladite composition comprend 1 % à 12 % en poids, en particulier 2 % à 8 % en poids, d'un catalyseur par rapport au poids total de la composition.

Ledit catalyseur est choisi parmi les composés catalyseurs de la réaction de polycondensation des résines phénoliques. Avantageusement et selon l'invention, ledit catalyseur est choisi parmi les mélanges d'acides. En particulier, avantageusement et selon l'invention, ledit catalyseur comprend au moins un acide xylène sulfonique et au moins un acide phosphorique.

Avantageusement et selon l'invention, ladite composition est dénuée de catalyseur (et de durcisseur) de la résine phénolique. Ceci a pour avantage d'éviter à avoir à manipuler des catalyseurs ou durcisseurs dont la manipulation et la mise en oeuvre nécessitent des précautions particulières vis-à-vis des opérateurs. Ceci évite également une diminution importante de la durée de vie de la composition comprenant la résine phénolique une fois le catalyseur ajouté à celle-ci.

L'invention concerne également un matériau composite sandwich comprenant au moins un matériau alvéolaire présentant des cavités, ledit matériau alvéolaire étant disposé entre au moins deux peaux extérieures, chaque peau extérieure étant formée d'au moins un matériau composite comprenant au moins un renfort sous forme de fibres et au moins un matériau polymère, dit matrice polymère, au sein duquel s'étendent les fibres, caractérisé en ce qu'il comprend une composition selon l'invention disposée au sein d'au moins une partie des cavités dudit matériau alvéolaire.

Une composition selon l'invention peut être utilisée pour tout type de matériau composite. En particulier, avantageusement et selon l'invention, ledit matériau alvéolaire est choisi parmi les matériaux présentant une structure en nids d'abeilles.

L'invention s'étend à un procédé de préparation d'un matériau, dit matériau composite sandwich, comprenant au moins un matériau alvéolaire présentant des cavités disposé entre au moins deux peaux extérieures, chaque peau extérieure étant formée d'au moins un matériau composite comprenant au moins un renfort sous forme de fibres et au moins un matériau polymère, dit matrice polymère, au sein duquel s'étendent les fibres,
dans lequel :
o on prépare une composition comprenant :
   - au moins un liant choisi parmi les résines phénoliques,
   - 34 % à 50 % en poids de particules formées d'au moins un solide pulvérulent choisi parmi le verre, les polymères, la silice et leurs mélanges, par rapport au poids total de la composition, lesdites particules présentant une taille moyenne inférieure à 1 mm,
o on dispose ladite composition au sein d'au moins une partie des cavités dudit matériau alvéolaire,
o on réalise une polymérisation dudit liant à une température comprise entre 110°C et 250°C.

Ainsi une composition selon l'invention peut être utilisée dans tout matériau composite sandwich à titre de composition de remplissage ou de renforcement local (bordures d'un panneau, jonction entre deux panneaux...).

En outre, un matériau composite sandwich comprenant une composition selon l'invention présente une résistance au feu améliorée. Un matériau composite sandwich selon l'invention présente également des propriétés de barrière au feu et d'isolation thermique améliorées.

En particulier, un tel matériau composite sandwich présente de très bons résultats aux tests de résistance au feu tels que les tests consistant à exposer une portion dudit panneau à une flamme, telle qu'une flamme formée par un bec Bunsen, par exemple pendant 60 secondes. En effet, les inventeurs ont observé que les portions dudit panneau dont les cavités sont remplies d'une composition selon l'invention présente une meilleure résistance au feu que les portions dudit panneau dont les cavités ne sont pas remplies d'une composition selon l'invention (pour un même panneau).

Un matériau composite sandwich comprenant une composition selon l'invention sandwich présente également de très bons résultats aux tests de dégagement de chaleur du type OSU (Université de l'Etat de l'Ohio, USA) au cours desquels le matériau est exposé à une source de chaleur radiante.

Avantageusement et selon l'invention, on remplit au moins une partie des cavités dudit matériau alvéolaire avec ladite composition.

Avantageusement et selon l'invention, après avoir disposé la composition, à l'endroit voulu, au sein des cavités dudit matériau alvéolaire on soumet ledit matériau composite sandwich à une étape de polymérisation permettant le durcissement de la résine phénolique et éventuellement de la matrice polymère des peaux extérieures du matériau composite sandwich.

Ainsi, avantageusement et selon l'invention, on soumet ensuite ledit matériau composite sandwich à une température comprise entre 15°C et 250°C, notamment entre 120°C et 180°C, et à une pression comprise entre 0,1 MPa et 3 MPa, et notamment entre 100 000 Pa et 700 000 Pa.

Il est également possible de réaliser l'étape de chauffage (polymérisation) du liant, et le cas échéant de la matrice polymère dudit matériau composite, sous vide c'est-à-dire notamment à une pression comprise entre 0,0001 Pa et 1000 Pa, et en particulier à une pression comprise entre 10 Pa et 100 Pa. Le vide est généralement formé à l'aide d'une pompe à vide connectée à un sac à vide dans lequel est disposé le matériau à polymériser.

Dans un autoclave, il est ainsi possible de disposer le matériau à polymériser sous vide et, en outre, d'appliquer une pression extérieure au matériau (dans l'enceinte de l'autoclave) supérieure à la pression atmosphérique.

Avantageusement et selon l'invention, on réalise simultanément une polymérisation dudit liant et une polymérisation de la matrice polymère dudit matériau composite à une température comprise entre 110°C et 250°C. En effet, les inventeurs ont constaté avec surprise qu'il est possible de réaliser au cours d'une même étape de chauffage, la polymérisation (ou durcissement) du liant à base de résine phénolique et également de la matrice polymère des peaux extérieures du matériau composite. Il est ainsi possible de s'affranchir d'une ou même souvent de plusieurs étapes préalables de polymérisation, contrairement aux procédés de préparation de matériaux composites sandwich selon l'état de la technique. L'utilisation d'une composition selon l'invention dénuée de catalyseur permet effectivement de polymériser au cours d'une même étape, à une température comprise entre 110°C et 250°C, le liant et la matrice polymère des peaux extérieures du matériau composite sans entraîner aucun problème de moussage, ni aucun problème d'écoulement ou de fuite de la composition entre le matériau alvéolaire et les peaux extérieures du matériau composite au cours de la polymérisation.

Selon un mode de réalisation particulièrement avantageux de l'invention, la résine phénolique est polymérisée à une température comprise entre 150°C et 220°C, et de préférence comprise entre 155°C et 170°C. Ainsi, il est par exemple possible de réaliser simultanément, lors d'une même étape de polymérisation, la polymérisation de la résine phénolique de la composition selon l'invention et la polymérisation de la matrice polymère des peaux extérieures du matériau composite sandwich, par exemple une résine époxy.

Après application de la composition au sein d'un matériau, tel qu'un matériau composite sandwich, la composition selon l'invention peut être soumise à une étape de polymérisation de façon à permettre une polymérisation au moins partielle de la résine phénolique de la composition. En particulier, la durée pendant laquelle est réalisée la polymérisation ainsi que la température et la pression auxquelles est réalisée la polymérisation de la composition selon l'invention sont choisies de façon à permettre une polymérisation au moins partielle de ladite résine phénolique et éventuellement des autres matériaux polymères. Avantageusement et selon l'invention, ladite étape de polymérisation de la résine phénolique est réalisée pendant une durée comprise entre 10 minutes et 8 heures, notamment entre 10 minutes et 5 heures, en particulier entre 30 minutes et 3 heures.

Avantageusement et selon l'invention, ladite étape de polymérisation de la résine phénolique est réalisée dans un autoclave, une étuve, ou dans un four.

Selon un autre mode de réalisation avantageux de l'invention, la résine phénolique est polymérisée à température ambiante (entre 20°C et 25°C).

En outre, avantageusement et selon l'invention, l'étape de polymérisation est réalisée en présence d'un taux d'humidité compris entre 20 % et 90 %, de préférence entre 40 % et 80 %. Par « taux d'humidité de l'air », on entend la masse de vapeur d'eau (g) / masse unitaire d'air sec (g) exprimée en pourcentage.

L'invention concerne aussi une composition, un matériau composite sandwich et un procédé de préparation d'un tel matériau composite sandwich caractérisé en combinaison par tout ou partie des caractéristiques mentionnées ci-dessus ou ci-après.

D'autres buts, caractéristiques et avantages de l'invention apparaissent à la lecture de la description suivante d'un de ses modes de réalisation préférentielle donnée à titre d'exemple non limitatif, et qui se réfère aux figures annexées dans lesquelles :
- la figure 1 est une vue schématique d'un matériau composite sandwich selon un premier mode de réalisation de l'invention,
- la figure 2 est une vue schématique d'un matériau composite sandwich selon un deuxième mode de réalisation de l'invention.

Une composition selon l'invention est préparée par mélange d'au moins un liant choisi parmi les résines phénoliques avec des particules, de préférence sphériques, formées d'au moins un solide pulvérulent choisi parmi le verre, les polymères, la silice et leurs mélanges, lesdites particules présentant une taille moyenne inférieure à 1 mm. Une composition selon l'invention est en particulier caractérisée en ce qu'elle comprend entre 34 % et 50 % en poids dudit matériau pulvérulent par rapport au poids total de la composition.

Le liant est choisi parmi les résines phénoliques obtenues par polycondensation de formaldéhyde (formol) et de phénol et/ou d'un dérivé phénolique tel que le crésol, la résorcine ou le xylénol.

Le liant peut par exemple être constitué d'au moins une résine phénolique telle que les résines CELLOBOND^{®} J2042L^{®}, J2027L^{®} ou J2018L^{®} commercialisées par la société HEXION (Sully, PAYS DE GALLES) ou encore une résine FXFN026^{®} commercialisée par la société SI GROUP (Schenectady, USA).

Les particules formées d'au moins un solide pulvérulent sont creuses ou pleines. Dans un mode de réalisation selon l'invention particulièrement avantageux les particules formées d'au moins un solide pulvérulent sont creuses. Dans un mode de réalisation particulièrement avantageux d'une composition selon l'invention, lesdites particules formées d'au moins un solide pulvérulent présentent un diamètre moyen inférieur à 1 mm, notamment compris entre 20 µm et 200 µm, et en particulier compris entre 40 µm et 150 µm.

Dans une variante particulièrement avantageuse d'une composition selon l'invention, les particules formées d'au moins un solide pulvérulent sont des billes de verre creuses ou pleines, de préférence des billes de verre creuses.

Dans une variante particulièrement avantageuse d'une composition selon l'invention, les particules polymériques sont choisies parmi les particules à base de résine phénolique. De telles particules présentent en effet une bonne compatibilité avec le liant, une plus faible densité que les billes de verre et une résistance au feu améliorée.

Les particules de silice comprennent par exemple des particules de silice pyrogénée, des particules de silice précipitée ou encore des particules dites de fumées de silice.

La mise en contact entre la résine phénolique et le(s) solide(s) pulvérulent(s) peut être réalisée à l'aide de tout dispositif adapté pour mettre en contact le liant et les particules formées d'au moins un solide pulvérulent et de préférence, adapté pour préparer un mélange homogène entre ledit liant et lesdites particules. Pour permettre de préparer une composition homogène il est préférable d'utiliser un mélangeur ou malaxeur, tel qu'un malaxeur liquide RUBIMIX^{®} L-120-R commercialisé par la société RUBI (Rubi, Espagne).

En outre, le liant et les particules formées d'au moins un solide pulvérulent peuvent, si besoin, être chauffés légèrement (par exemple entre 20°C et 50°C, notamment entre 25°C et 30°C) avant et/ou pendant le mélange de façon à accélérer et à faciliter l'obtention d'un mélange homogène.

Dans un mode de réalisation particulièrement avantageux, on dispose une composition selon l'invention au sein d'au moins une partie des cavités d'un matériau alvéolaire, ledit matériau alvéolaire étant disposé entre au moins deux peaux extérieures d'un matériau composite sandwich, chaque peau extérieure étant formée d'au moins un matériau composite comprenant au moins un renfort sous forme de fibres et au moins un matériau polymère, dit matrice polymère, au sein duquel s'étendent les fibres.

Le matériau alvéolaire est de préférence choisi parmi les matériaux présentant une structure en nids d'abeilles (également appelé « NIDA »). Il s'agit par exemple de NIDA NOMEX^{®}, formé d'une matrice en résine phénolique et de fibres aramide, commercialisé par la société HEXCEL (Sully, PAYS DE GALLES).

On dispose la composition selon l'invention, à l'endroit voulu, au sein des cavités du matériau alvéolaire et on soumet le matériau composite sandwich à une étape de polymérisation permettant le durcissement de la résine phénolique et éventuellement simultanément de la matrice polymère des peaux extérieures du matériau composite sandwich.

La polymérisation de la résine phénolique peut être réalisée à température ambiante ou à une température supérieure à la température ambiante et à la pression atmosphérique ou à une pression supérieure à la pression atmosphérique. En particulier, la température est comprise entre 15°C et 250°C et la pression est comprise entre 100 000 Pa et 700 000 Pa.

Selon un mode de réalisation particulièrement avantageux de l'invention, la résine phénolique est polymérisée à une température comprise entre 150°C et 220°C, et de préférence comprise entre 155°C et 170°C. On peut ainsi réaliser simultanément la polymérisation de la résine phénolique et la polymérisation de la matrice polymère des peaux extérieures du matériau composite sandwich, par exemple une résine époxy.

L'étape de polymérisation de la résine phénolique est réalisée pendant une durée adaptée pour permettre le durcissement de la résine phénolique, notamment une durée comprise entre 10 minutes et 5 heures, de préférence entre 30 minutes et 3 heures.

L'étape de polymérisation d'une composition selon l'invention est par exemple réalisée dans une étuve à 160°C pendant 1 heure.

L'étape de polymérisation de la résine phénolique est réalisée dans un autoclave, une étuve, ou dans un four selon la température et la pression choisies.

En présence d'un catalyseur de polymérisation de la résine phénolique, la résine phénolique peut être polymérisée à température ambiante (entre 20°C et 25°C).

En outre, il est à noter qu'avant polymérisation de la résine phénolique, la composition selon l'invention se présente avantageusement sous la forme d'une pâte dont la viscosité peut varier en fonction de la nature et des proportions de liant et de particules solides utilisées. De préférence, la composition selon l'invention présente une viscosité comprise entre 300 mPa.s et 700 mPa.s.

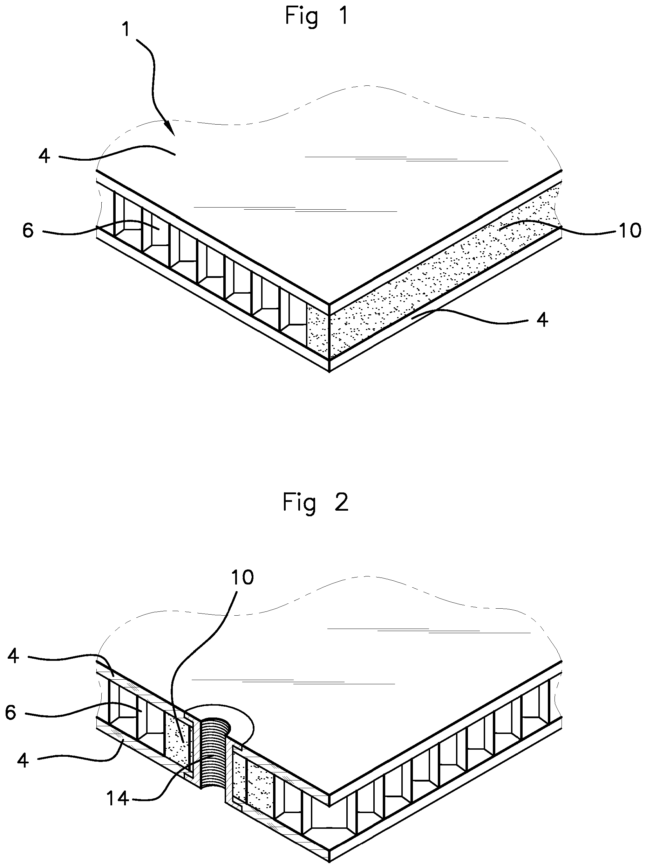

Dans un premier mode de réalisation représenté en figure 1, la composition 10 selon l'invention est disposée en bordure d'un panneau 1 composite sandwich comprenant un matériau alvéolaire 6, formant l'âme en nids d'abeille du panneau 1, et deux peaux extérieures 4 formées d'un matériau composite comprenant par exemple des fibres de carbone au sein d'une matrice polymère telle qu'une résine époxy. Le panneau 1 composite sandwich présente par exemple une épaisseur totale comprise entre 3 mm et 45 mm. La composition 10 selon l'invention est disposée tout le long de la bordure du panneau 1, sur toute l'épaisseur du panneau et par exemple sur une largeur de 1,5 cm (c'est-à-dire 1,5 cm depuis un bord externe du panneau). La largeur selon laquelle est disposée la composition dépend du type de panneau composite sandwich préparé et est par exemple adaptée pour remplir au moins une alvéole et demi de l'âme en nids d'abeille du panneau 1 depuis le bord externe du panneau. Une composition selon l'invention permet ainsi à la fois de renforcer mécaniquement les bordures d'un panneau composite sandwich et d'améliorer la tenue au feu du panneau composite sandwich, sans augmenter significativement la masse dudit panneau.

Dans un deuxième mode de réalisation représenté en figure 2, la composition 10 selon l'invention est disposée autour d'un insert 14 en matériau polymère ou métallique. L'insert 14 (du type « insert bobine ») présente par exemple un diamètre de 10 mm dont les extrémités en forme de disques présentent un diamètre de 20 mm. Un trou a d'abord été formé par découpage dans l'épaisseur du panneau composite sandwich puis on a placé un insert qu'on a fixé à l'aide de la composition pâteuse selon l'invention. La composition a été appliquée de façon à entourer l'insert et à remplir au moins partiellement les cavités adjacentes à l'insert dans un rayon compris entre 20 mm et 30 mm autour de l'insert, c'est-à-dire de façon à opérer un bordurage de l'insert d'un diamètre au moins égal à deux fois le diamètre de l'insert. Ainsi, on applique la composition selon l'invention par exemple dans un rayon d'au moins 15 mm autour de l'insert.

Une composition selon l'invention permet donc de maintenir un insert placé au sein d'un panneau composite sandwich et de renforcer mécaniquement la zone du panneau dans laquelle l'insert est disposé. En outre, la composition selon l'invention permet d'améliorer la tenue au feu du panneau composite sandwich, sans augmenter significativement la masse dudit panneau.

### EXEMPLE 1

On prépare une composition comprenant 1 kg de résine phénolique CELLOBOND^{®} J2042L^{®} commercialisée par la société HEXION, et 550 g de particules de verre creuses présentant un diamètre moyen de 70 µm (mesuré par tamisage). Une telle composition comprend donc 35 % en poids de particules de verre. Aucun catalyseur, ni durcisseur de la résine phénolique n'est ajouté dans la composition. La résine phénolique et les particules de verre sont mises en contact et mélangées dans un malaxeur RUBIMIX^{®} L-120-R commercialisé par la société RUBI.

On prépare un matériau alvéolaire en nids d'abeilles de 15 mm d'épaisseur en NIDA NOMEX^{®}, formé d'une matrice en résine phénolique et de fibres aramide, commercialisé par la société HEXCEL. D'autre part, on choisit d'autre part des plis de pré-imprégnés comprenant une matrice polymère époxy et des fibres de verre et de carbone. On dispose trois plis de pré-imprégnés en nids d'abeilles sur un plan de travail, on dispose le matériau alvéolaire sur les trois premiers plis de pré-imprégnés. On dispose la composition précédemment préparée à l'intérieur de l'ensemble des cavités du matériau alvéolaire et on dispose trois autres plis de pré-imprégnés au-dessus du matériau alvéolaire dont les cavités sont remplies de ladite composition. Chaque pli de pré-imprégnés présente une épaisseur de 0,1 mm. Le matériau composite sandwich ainsi préparé présente donc une épaisseur de 15,6 mm.

On soumet ensuite le matériau composite sandwich ainsi préparé à une étape de polymérisation à 150°C dans une étuve, et sous vide obtenu à l'aide d'une pompe MINIVAC 1 PS^{®} PS5^{®} commercialisée par la société MIL'S (Gênas, France). La durée totale du cycle de polymérisation est de 4 heures et 50 minutes (50 minutes de montée en température de 2°C/minute, depuis 22°C jusqu'à 150°C ; un maintien à la température de 150°C pendant 2 heures ; puis un refroidissement d'une heure sous ventilation pour atteindre à la température de 22°C).

### EXEMPLE 2

On prépare une composition comprenant 1 kg de résine phénolique CELLOBOND^{®} J2042L^{®} commercialisée par la société HEXION, et 550 g de particules de résine phénolique creuses (BJO-0930^{®} commercialisées par Asia Pacific Microspheres) présentant un diamètre moyen de 90 µm (mesuré par tamisage) et une densité de 0,228. Une telle composition comprend donc 35 % en poids de particules de résine phénolique. Aucun catalyseur, ni durcisseur de la résine phénolique n'est ajouté dans la composition. La résine phénolique et les particules de résine phénolique sont mises en contact et mélangées dans un malaxeur RUBIMIX^{®} L-120-R commercialisé par la société RUBI.

On prépare un matériau alvéolaire en nids d'abeilles de 15 mm d'épaisseur en NIDA NOMEX^{®}, formé d'une matrice en résine phénolique et de fibres aramide, commercialisé par la société HEXCEL. D'autre part, on choisit d'autre part des plis de pré-imprégnés comprenant une matrice polymère à base de résine phénolique et des fibres de verre et de carbone. On dispose trois plis de pré-imprégnés en nids d'abeilles sur un plan de travail, on dispose le matériau alvéolaire sur les trois premiers plis de pré-imprégnés. On dispose la composition précédemment préparée à l'intérieur de l'ensemble des cavités du matériau alvéolaire et on dispose trois autres plis de pré-imprégnés au-dessus du matériau alvéolaire dont les cavités sont remplies de ladite composition. Chaque pli de pré-imprégnés présente une épaisseur de 0,1 mm. Le matériau composite sandwich ainsi préparé présente donc une épaisseur de 15,6 mm.

On soumet ensuite le matériau composite sandwich ainsi préparé à une étape de polymérisation à 110°C dans une étuve et sous vide obtenu à l'aide d'une pompe MINIVAC 1 PS^{®} PS5^{®} commercialisée par la société MIL'S (Gênas, France). La durée totale du cycle de polymérisation est de 5 heures et 50 minutes (50 minutes de montée en température de 2°C/minute, depuis 22°C jusqu'à 110°C ; un maintien à la température de 150°C pendant 3 heures ; puis un refroidissement d'une heure sous ventilation pour atteindre à la température de 22°C).

### EXEMPLE 3

On prépare une composition et un matériau composite sandwich conformément à l'exemple 1. On réalise la polymérisation du matériau composite sandwich de la même manière qu'à l'exemple 1 mais dans un autoclave à une pression de 1,5 MPa.

### EXEMPLE 4

On prépare une composition et un matériau composite sandwich conformément à l'exemple 2. On réalise la polymérisation du matériau composite sandwich de la même manière qu'à l'exemple 2 mais dans un autoclave à une pression de 1,5 MPa.

Chacun des matériaux composites sandwich préparés dans les exemples 1 à 4 permet une polymérisation simultanée de la matrice polymère des peaux extérieures du matériau composite sandwich et de la résine phénolique de la composition de remplissage des alvéoles du matériau composite sandwich, sans aucune fuite de la composition ni aucun phénomène de moussage. En particulier, aucune bulle d'air n'a été constatée au sein de la composition de remplissage des alvéoles du matériau composite sandwich.

Chacun des matériaux composites sandwich préparés dans les exemples 1 à 4 présente en outre une excellente résistance au feu lors des tests consistant à exposer une portion dudit panneau à une flamme, telle qu'une flamme formée par un bec Bunsen pendant 60 secondes.

### EXEMPLE COMPARATIF

On prépare une composition comprenant 50 % en poids de résine phénolique CELLOBOND^{®} J2042L^{®} commercialisée par la société HEXION, 35 % en poids de particules de verre creuses et 5 % en poids de catalyseur de polymérisation de la résine phénolique. La résine phénolique et les particules de verre sont mises en contact et mélangées dans un malaxeur RUBIMIX^{®} L-120-R commercialisé par la société RUBI.

On prépare un matériau alvéolaire en nids d'abeilles de 15 mm d'épaisseur en NIDA NOMEX^{®}, formé d'une matrice en résine phénolique et de fibres aramide, commercialisé par la société HEXCEL. D'autre part, on choisit d'autre part des plis de pré-imprégnés comprenant une matrice polymère époxy et des fibres de verre et de carbone. On dispose trois plis de pré-imprégnés en nids d'abeilles sur un plan de travail, on dispose le matériau alvéolaire sur les trois premiers plis de pré-imprégnés. On dispose la composition précédemment préparée à l'intérieur de l'ensemble des cavités du matériau alvéolaire et on dispose trois autres plis de pré-imprégnés au-dessus du matériau alvéolaire dont les cavités sont remplies de ladite composition. Chaque pli de pré-imprégnés présente une épaisseur de 0,1 mm. Le matériau composite sandwich ainsi préparé présente donc une épaisseur de 15,6 mm.

On soumet ensuite le matériau composite sandwich ainsi préparé à une étape de polymérisation à 150°C dans une étuve à la pression atmosphérique. La durée totale du cycle de polymérisation est de 4 heures et 50 minutes (50 minutes de montée en température de 2°C/minute, depuis 22°C jusqu'à 150°C ; un maintien à la température de 150°C pendant 2 heures ; puis un refroidissement d'une heure sous ventilation pour atteindre à la température de 22°C).

On observe un moussage de la résine phénolique au cours de la polymérisation qui entraine une déformation des peaux extérieures du matériau composite sandwich et ne permet pas l'obtention d'un matériau composite sandwich satisfaisant. En outre, les propriétés mécaniques du matériau composite sandwich ainsi obtenu sont très faibles compte tenu des nombreuses bulles d'air présentes au sein du matériau.

## Revendications

1. - Composition comprenant :
- au moins un liant choisi parmi les résines phénoliques,
des particules formées d'au moins un solide pulvérulent choisi parmi le verre, les polymères thermodurcissables, la silice et leurs mélanges, lesdites particules présentant une taille moyenne inférieure à 1 mm,
**caractérisée en ce que** :
- elle comprend entre 34 % et 50 % en poids dudit matériau pulvérulent par rapport au poids total de ladite composition,
- elle est dénuée de catalyseur dudit liant.

2. - Composition selon la revendication 1, **caractérisée en ce qu'**elle comprend entre 35 % et 47 % en poids dudit solide pulvérulent par rapport au poids total de ladite composition.

3. - Composition selon l'une des revendications 1 ou 2, **caractérisée en ce qu'**elle présente un rapport massique solide pulvérulent/liant compris entre 0,6 et 0,9, notamment compris entre 0,6 et 0,75.

4. - Composition selon l'une des revendications 1 à 3, **caractérisée en ce qu'**elle comprend entre 50 % et 66 % en poids de liant par rapport au poids total de ladite composition.

5. - Composition selon l'une des revendications 1 à 4, **caractérisée en ce que** lesdites particules formées d'au moins un solide pulvérulent sont choisies parmi les particules de résine phénolique.

6. - Composition selon l'une des revendications 1 à 5, **caractérisée en ce que** lesdites particules formées d'au moins un solide pulvérulent sont des particules creuses.

7. - Composition selon l'une des revendications 1 à 6, **caractérisée en ce que** lesdites particules formées d'au moins un solide pulvérulent présentent un diamètre moyen compris entre 20 µm et 200 µm, en particulier compris entre 40 µm et 150 µm.

8. - Composition selon l'une des revendications 1 à 7, **caractérisée en ce que** lesdites particules formées d'au moins un solide pulvérulent présentent une densité apparente comprise entre 0,05 et 0,7, en particulier comprise entre 0,1 et 0,6.

9. - Composition selon l'une des revendications 1 à 8, **caractérisée en ce qu'**elle est dénuée de plastifiant.

10. - Matériau composite sandwich comprenant au moins un matériau alvéolaire présentant des cavités, ledit matériau alvéolaire étant disposé entre au moins deux peaux extérieures, chaque peau extérieure étant formée d'au moins un matériau composite comprenant au moins un renfort sous forme de fibres et au moins un matériau polymère, dit matrice polymère, au sein duquel s'étendent les fibres, **caractérisé en ce qu'**il comprend une composition comprenant :
- au moins un liant choisi parmi les résines phénoliques,
des particules formées d'au moins un solide pulvérulent choisi parmi le verre, les polymères thermodurcissables, la silice et leurs mélanges, lesdites particules présentant une taille moyenne inférieure à 1 mm,
- entre 34 % et 50 % en poids dudit matériau pulvérulent par rapport au poids total de ladite composition,
et **en ce que** :
- ladite composition est dénuée de catalyseur dudit liant,
- ladite composition est disposée au sein d'au moins une partie des cavités dudit matériau alvéolaire.

11. - Matériau composite sandwich selon la revendication 10, **caractérisé en ce que** ledit matériau alvéolaire est choisi parmi les matériaux présentant une structure en nids d'abeilles.

12. - Procédé de préparation d'un matériau, dit matériau composite sandwich, comprenant au moins un matériau alvéolaire présentant des cavités, ledit matériau alvéolaire étant disposé entre au moins deux peaux extérieures, chaque peau extérieure étant formée d'au moins un matériau composite comprenant au moins un renfort sous forme de fibres et au moins un matériau polymère, dit matrice polymère, au sein duquel s'étendent les fibres,
dans lequel :
∘ on prépare une composition comprenant :
- au moins un liant choisi parmi les résines phénoliques,
- 34 % à 50 % en poids de particules formées d'au moins un solide pulvérulent choisi parmi le verre, les polymères thermodurcissables, la silice et leurs mélanges, par rapport au poids total de la composition, lesdites particules présentant une taille moyenne inférieure à 1 mm,
ladite composition étant dénuée de catalyseur dudit liant,
∘ on dispose ladite composition au sein d'au moins une partie des cavités dudit matériau alvéolaire,
∘ on réalise une polymérisation dudit liant à une température comprise entre 110°C et 250°C.

13. - Procédé selon la revendication 12, **caractérisé en ce qu'**on remplit au moins une partie des cavités dudit matériau alvéolaire avec ladite composition.

14. - Procédé selon l'une des revendications 12 ou 13, **caractérisé en ce qu'**on soumet ensuite ledit matériau composite sandwich à une température comprise entre 120°C et 180°C et à une pression comprise entre 100 000 Pa et 700 000 Pa.

15. - Procédé selon l'une des revendications 12 à 14, **caractérisé en ce qu'**on réalise simultanément une polymérisation dudit liant et une polymérisation de la matrice polymère dudit matériau composite à une température comprise entre 110°C et 250°C.

## Patentansprüche

1. Zusammensetzung, umfassend:
- mindestens ein Bindemittel, ausgewählt aus Phenolharzen, Partikel, gebildet aus mindestens einem pulverförmigen Feststoff, ausgewählt aus Glas, wärmehärtbaren Polymeren, Siliziumdioxid und seinen Mischungen, wobei die Partikel eine mittlere Größe von weniger als 1 mm aufweisen, **dadurch gekennzeichnet, dass**:
- sie zwischen 34 Gew.% und 50 Gew.% des pulverförmigen Materials mit Bezug auf das Gesamtgewicht der Zusammensetzung umfasst,
- sie frei von Katalysator des Bindemittels ist.

2. Zusammensetzung nach Anspruch 1, **dadurch gekennzeichnet, dass** sie zwischen 35 Gew.% und 47 Gew.% des pulverförmigen Feststoffs mit Bezug auf das Gesamtgewicht der Zusammensetzung umfasst,

3. Zusammensetzung nach einem der Ansprüche 1 oder 2, **dadurch gekennzeichnet, dass** sie ein Gewichtsverhältnis pulverförmiger Feststoff / Bindemittel im Bereich zwischen 0,6 und 0,9, insbesondere im Bereich zwischen 0,6 und 0,75 aufweist.

4. Zusammensetzung nach einem der Ansprüche 1 bis 3, **dadurch gekennzeichnet, dass** sie zwischen 50 Gew.% und 66 Gew.% Bindemittel mit Bezug auf das Gesamtgewicht der Zusammensetzung umfasst.

5. Zusammensetzung nach einem der Ansprüche 1 bis 4, **dadurch gekennzeichnet, dass** die Partikel, gebildet aus mindestens einem pulverförmigen Feststoff, ausgewählt sind aus Phenolharzpartikeln.

6. Zusammensetzung nach einem der Ansprüche 1 bis 5, **dadurch gekennzeichnet, dass** die Partikel, gebildet aus mindestens einem pulverförmigen Feststoff, hohle Partikel sind.

7. Zusammensetzung nach einem der Ansprüche 1 bis 6, **dadurch gekennzeichnet, dass** die Partikel, gebildet aus mindestens einem pulverförmigen Feststoff, einen mittleren Durchmesser im Bereich zwischen 20 µm und 200 µm, insbesondere im Bereich zwischen 40 µm und 150 µm aufweisen.

8. Zusammensetzung nach einem der Ansprüche 1 bis 7, **dadurch gekennzeichnet, dass** die Partikel, gebildet aus mindestens einem pulverförmigen Feststoff, eine Schüttdichte im Bereich zwischen 0,05 und 0,7, insbesondere im Bereich zwischen 0,1 und 0,6 aufweisen.

9. Zusammensetzung nach einem der Ansprüche 1 bis 8, **dadurch gekennzeichnet, dass** sie frei von Weichmacher ist.

10. Sandwich-Verbundstoff, umfassend mindestens ein Schaummaterial, das Hohlräume aufweist, wobei das Schaummaterial zwischen mindestens zwei äußeren Häuten angeordnet ist, wobei jede äußere Haut aus mindestens einem Verbundstoff gebildet ist, umfassend mindestens eine Verstärkung in Form von Fasern und mindestens ein Polymermaterial, bezeichnet als Polymermatrix, in dem sich die Fasern erstrecken, **dadurch gekennzeichnet, dass** er eine Zusammensetzung umfasst, umfassend:
- mindestens ein Bindemittel, ausgewählt aus Phenolharzen, Partikel, gebildet aus mindestens einem pulverförmigen Feststoff, ausgewählt aus Glas, wärmehärtbaren Polymeren, Siliziumdioxid und seinen Mischungen, wobei die Partikel eine mittlere Größe von weniger als 1 mm aufweisen,
- zwischen 34 Gew.% und 50 Gew.% des pulverförmigen Materials mit Bezug auf das Gesamtgewicht der Zusammensetzung,
und dadurch, dass:
- die Zusammensetzung frei von Katalysator des Bindemittels ist,
- die Zusammensetzung in mindestens einem Teil der Hohlräume des Schaummaterials angeordnet ist.

11. Sandwich-Verbundstoff nach Anspruch 10, **dadurch gekennzeichnet, dass** das Schaummaterial ausgewählt ist aus den Materialien, die eine Wabenstruktur aufweisen.

12. Verfahren zur Herstellung eines Materials, bezeichnet als Sandwich-Verbundstoff, umfassend mindestens ein Schaummaterial, das Hohlräume aufweist, wobei das Schaummaterial zwischen mindestens zwei äußeren Häuten angeordnet ist, wobei jede äußere Haut aus mindestens einem Verbundstoff gebildet ist, umfassend mindestens eine Verstärkung in Form von Fasern und mindestens ein Polymermaterial, bezeichnet als Polymermatrix, in dem sich Fasern erstrecken, wobei:
∘ eine Zusammensetzung hergestellt wird, umfassend:
- mindestens ein Bindemittel, ausgewählt aus Phenolharzen,
- 34 Gew.% bis 50 Gew.% Partikel, gebildet aus mindestens einem pulverförmigen Feststoff, ausgewählt aus Glas, wärmehärtbaren Polymeren, Siliziumdioxid und seinen Mischungen, mit Bezug auf das Gesamtgewicht der Zusammensetzung, wobei die Partikel eine mittlere Größe von weniger als 1 mm aufweisen,
wobei die Zusammensetzung frei von Katalysator des Bindemittels ist,
∘ die Zusammensetzung in mindestens einem Teil der Hohlräume des Schaummaterials angeordnet wird,
∘ eine Polymerisierung des Bindemittels bei einer Temperatur im Bereich zwischen 110 °C bis 250 °C durchgeführt wird.

13. Verfahren nach Anspruch 12, **dadurch gekennzeichnet, dass** mindestens ein Teil der Hohlräume des Schaummaterials mit der Zusammensetzung gefüllt wird.

14. Verfahren nach einem der Ansprüche 12 oder 13, **dadurch gekennzeichnet, dass** anschließend das Sandwich-Verbundmaterial einer Temperatur im Bereich wischen 120 °C und 180 °C und einem Druck im Bereich von zwischen 100 000 Pa und 700 000 Pa ausgesetzt wird.

15. Verfahren nach einem der Ansprüche 12 bis 14, **dadurch gekennzeichnet, dass** gleichzeitig eine Polymerisierung des Bindemittels und eine Polymerisierung der Polymermatrix des Verbundstoffs bei einer Temperatur im Bereich zwischen 110 °C bis 250 °C durchgeführt wird.

## Claims

1. A composition comprising:
- at least one binder selected from among phenolic resins, particles formed of at least one powdered solid selected from among glass, thermosetting polymers, silica and mixtures thereof, said particles having a mean size of less than 1 mm
**characterized in that**
- it comprises between 34 % and 50 % by weight of said powdered material relative to the total weight of said composition;
- it is devoid of catalyst of said binder.

2. The composition according to claim 1, **characterized in that** it comprises between 35 % and 47 % by weight of said powdered solid relative to the total weight of said composition.

3. The composition according to one of claims 1 or 2, **characterized in that** it has a powdered solid/binder mass ratio of between 0.6 and 0.9, in particular between 0.6 and 0.75.

4. The composition according to one of claims 1 to 3, **characterized in that** it comprises between 50 % and 66 % by weight of binder relative to the total weight of said composition.

5. The composition according to one of claims 1 to 4, **characterized in that** said particles formed of at least one powdered solid are selected from among particles of phenolic resin.

6. The composition according to one of claims 1 to 5, **characterized in that** said particles formed of at least one powdered solid are hollow particles.

7. The composition according to one of claims 1 to 6, **characterized in that** said particles formed of at least one powdered solid have a mean diameter of between 20 µm and 200 µm, in particular between 40 µm and 150 µm.

8. The composition according to one of claims 1 to 7, **characterized in that** said particles formed of at least one powdered solid have a bulk density of between 0.05 and 0.7, in particular between 0.1 and 0.6.

9. The composition according to one of claims 1 to 8, **characterized in that** it is devoid of plasticizer.

10. A composite sandwich material comprising at least one cellular material having cavities, said cellular material being arranged between at least two outer skins, each outer skin being formed of at least one composite material comprising at least one reinforcement in the form of fibres, and at least one polymer material called polymer matrix, within which the fibres extend, **characterized in that** it comprises a composition comprising:
- at least one binder selected from among phenolic resins, particles formed of at least one powdered solid selected from among glass, thermosetting polymers, silica and mixtures thereof, said particles having a mean size of less than 1 mm;
- between 34 % and 50 % by weight of said powdered material relative to the total weight of said composition;
and **in that**:
- said composition is devoid of catalyst of said binder;
- said composition is arranged within at least one portion of the cavities of said cellular material.

11. The composite sandwich material according to claim 10, **characterized in that** said cellular material is selected from among materials having a honeycomb structure.

12. A method for preparing a material called composite sandwich material, comprising at least one cellular material having cavities, said cellular material being arranged between at least two outer skins, each outer skin being formed of at least one composite material comprising at least one reinforcement in the form of fibres and at least one polymer material called polymer matrix, within which the fibres extend, wherein:
∘ a composition is prepared comprising:
▪ at least one binder selected from among phenolic resins,
▪ 34 % to 50 % by weight of particles formed of at least one powdered solid selected from among glass, thermosetting polymers, silica and mixtures thereof, relative to the total weight of the composition, said particles having a mean size of less than 1 mm,
said composition being devoid of catalyst of said binder;
∘ said composition is arranged within at least one portion of the cavities of said cellular material,
∘ said binder is cured at a temperature of between 110 °C and 250 °C.

13. The method according to claim 12, **characterized in that** at least one portion of the cavities of said cellular material is filled with said composition.

14. The method according to one of claims 12 or 13, **characterized in that** said composite sandwich material is then subjected to a temperature of between 120 °C and 180 °C and to a pressure of between 100 000 Pa and 700 000 Pa.

15. The method according to one of claims 12 to 14, **characterized in that** curing of said binder and curing of the polymer matrix of said composite material are carried out simultaneously at a temperature of between 110°C and 250 °C.
